# EUROPÄISCHE PATENTSCHRIFT

(11) **EP 3 362 253 B1**
(45) Veröffentlichungstag und Bekanntmachung des Hinweises auf die Patenterteilung: **03.07.2019**
(21) Anmeldenummer: 17724317.7
(22) Anmeldetag: 16.05.2017
(51) Int. Cl.: B29C 49/56, B29C 49/06, B29L 31/00

(54) **FORM ZUR FORMUNG VON HOHLKÖRPERN AUS VORFORMLINGEN**
MOULD FOR FORMING HOLLOW ARTICLES FROM PARISONS
MOULE DE MISE EN FORME DE CORPS CREUX À PARTIR DE PRÉFORMES

(30) Priorität: 19.05.2016 DE 102016006066
(43) Veröffentlichungstag der Anmeldung: 22.08.2018
(73) Patentinhaber: KHS Corpoplast GmbH, 22145 Hamburg (DE)
(72) Erfinder: BAUMGARTE, Rolf, 22926 Ahrensburg (DE); LINKE, Michael, 22159 Hamburg (DE)
(74) Vertreter: Meissner Bolte Partnerschaft mbB
(86) Internationale Anmeldenummer: PCT/EP2017/000591
(87) Internationale Veröffentlichungsnummer: WO 2017/198332

(56) Entgegenhaltungen:
- EP-A1- 2 435 235
- WO-A1-2016/051373
- CH-A2- 710 158
- US-A1- 2005 238 753
- US-A1- 2011 287 130
- US-B1- 6 805 548

## Beschreibung

Die vorliegende Erfindung betrifft eine Form zur Formung von Hohlkörpern aus Vorformlingen.

Hohlkörper, insbesondere Behälter, wie z.B. Flaschen, werden heute oft im Blasformverfahren innerhalb einer geschlossenen Form aus einem Vorformling aus einem thermoplastischen Kunststoff geformt. Dabei wird der Vorformling, der beispielsweise aus PET bestehen kann, zunächst erwärmt, so dass er plastisch verformbar ist, und in eine Form eingebracht, die der Form des zu formenden Behälters entspricht.

Die Form ist in der Regel zweiteilig mit einer vertikalen Teilungsebene parallel zur Symmetrieachse des zu formenden Behälters, so dass sie zur Entnahme des fertig ausgeformten Behälters geöffnet werden kann. Die Formteile können den Boden des zu formenden Behälters mit umfassen, oder es kann eine separate Bodenform eingesetzt werden, die für die zu beschreibende Erfindung jedoch nicht weiter vor Bedeutung ist. Im Rahmen dieser Anmeldung soll insofern von einer zweiteiligen Form gesprochen werden, auch wenn die Form noch weitere, für die Erfindung irrelevante Teile umfassen kann, nämlich z.B. ein Bodenteil.

Die Ausformung des Behälters erfolgt nach Einbringen des Vorformlings in die Form durch Einleiten eines Druckmediums in den Vorformling, wobei das Druckmedium gasförmig oder flüssig sein kann. Bei der Verwendung eines gasförmigen Mediums im klassischen Blasformverfahren wird ein Behälter ausgeformt, der ggfs. im nächsten Schritt gefüllt werden kann. Bei der Verwendung eines flüssigen Druckmediums bei der hydraulischen Behälterformung kann das Füllgut als Druckmedium verwendet werden, so dass in einem Arbeitsgang ein gefüllter Behälter, beispielsweise eine Wasserflasche, hergestellt werden kann. Beide Alternativen sollen hier umfasst sein, da die nachfolgend beschriebene Erfindung für beide Verfahren einsetzbar ist. Die Vorteile der Erfindung treten aber insbesondere bei der hydraulischen Formung hervor.

Bei der Behälterformung wird das Druckmedium unter hohem Druck in den Vorformling eingeleitet, wobei der Vorformling, ggfs. unter Zuhilfenahme einer Reckstange, axial und radial gestreckt wird, so dass sich das Material an die Innenfläche der Form anlegt und den Behälter ausbildet.

Der Druckanstieg ist dabei gegen Ende des Formprozesses am größten, wenn der Behälter praktisch fertig ausgeformt ist und an der Form anliegt. Der Druckanstieg ist besonders groß, wenn ein flüssiges, inkompressibles Druckmedium verwendet wird. Zur präzisen Ausformung des Behälters ist es wichtig, dass die zweiteilige Form auch gegen den hohen Druck und insbesondere die Druckspitze am Ende des Formvorgangs sicher in der geschlossenen Position gehalten wird. Insbesondere das möglicherweise in der Mechanik vorhandene Spiel muss ausgeglichen werden, um ein leichtes Öffnen der Form, das sogenannte Atmen, zu verhindern.

Eine bekannte Möglichkeit des Spielausgleichs ist die Montage zumindest einer Formhälfte auf einem Formträger auf einer Art Luftkissen, so dass die Form geschlossen und der Formträger zugehalten werden kann. Die eigentlichen Formhälften werden durch das Luftkissen aufeinander gedrückt, so dass ein Spiel des Schließmechanismus ausgeglichen werden kann. Bei gasförmigen Druckmedien zur Behälterformung kann das Druckmedium auch für das Luftkissen verwendet werden.

Alternativ können die Formteile beispielsweise auch durch pneumatisch oder hydraulisch angetriebene Keile zugehalten werden.

Nachteil der bekannten Ausgestaltungen ist jedoch, dass der Aufbau der Form damit komplexer wird, was zu einer erschwerten Reinigung der Form führt. Insbesondere bei der hydraulischen Formung und gleichzeitigen Füllung kann es zum Verspritzen von Füllgut in der Form oder zum Platzen eines Behälters bei der Formung kommen. Aus hygienischen Gründen müssen die Formen einer Blasformstation und insbesondere einer Station zum simultanen Formen und Füllen eines Behälters regelmäßig gereinigt werden, was bei komplexen Konstruktionen, wie den oben geschilderten Lösungen mit Luftkissen oder zusätzlichen beweglichen Keilen, aufwändig ist.

Es ist deshalb Aufgabe der Erfindung, eine Form zur Formung von Hohlkörpern aus Vorformlingen mit einem Schließmechanismus vorzuschlagen, der die sichere Zuhaltung der Form auch unter hohem Druck ermöglicht und darüber hinaus einfach zu reinigen ist.

Blasformen mit ähnlichen Schließmechanismen sind in den folgenden Dokumente beschrieben: US2005/0238753A1,EP2435235B1, US6805548B1, CH710158A2 und WO2016/051373A1.

Die Aufgabe wird erfindungsgemäß gelöst durch eine zweiteilige Form zur Formung von Hohlkörpern aus Vorformlingen, insbesondere von Behältern, durch ein unter Druck in den Vorformling eingeleitetes gasförmiges oder flüssiges Druckmedium, bei der zumindest ein Teil der Form um eine Drehachse drehbar gelagert ist, so dass die beiden Teile von einer geöffneten Position in eine geschlossene Position überführbar sind, und wobei jeder Formteil um eine zu der Drehachse parallelen Achse drehbar mit dem einen Ende eines Kniehebels verbunden ist. Die beiden anderen Enden der beiden Kniehebel sind um eine zu der Drehachse des Formteils parallelen Achse drehbar miteinander und mit einem Betätigungsmechanismus verbunden. Die Form ist erfindungsgemäß dadurch gekennzeichnet, dass die Kniehebel in der geschlossenen Position der Form kurz vor ihrem Totpunkt stehen und der Betätigungsmechanismus eine elastische Kraft auf die Verbindungsachse der Kniehebel in Richtung ihres Totpunkts ausübt.

Zumindest ein Teil der erfindungsgemäßen Form ist um eine Achse drehbar gelagert, so dass er gegen einen feststehenden zweiten Formteil von einer offenen in eine geschlossene Form überführt werden kann. Die Form kann auch so gestaltet sein, dass beide Formteile um jeweils eine Drehachse drehbar sind, so dass sich beim Öffnen und Schließen der Form beide Teile bewegen. Die Drehachse kann auch eine gemeinsame Drehachse sein.

Der Schließmechanismus der Form umfasst ein Paar erster Kniehebel, von denen jeweils einer mit einem Ende mit jeweils einem Formteil verbunden ist. Die Verbindung erfolgt drehbar um eine Achse, die parallel zur Drehachse des oder der Formteile verläuft.

Die ersten Kniehebel bilden einen Doppelkniehebel, indem sie mit ihrem anderen Ende miteinander verbunden sind, und zwar drehbar um eine Achse, die wiederum parallel zur Drehachse des oder der Formteile verläuft.

Der aus den beiden Kniehebeln gebildete Doppelkniehebel ist mit einem Betätigungsmechanismus verbunden, der die Bewegung zwischen der offenen und der geschlossenen Position herbeiführen kann.

In der geschlossenen Position der Form befindet sich der aus den beiden Kniehebeln gebildete Doppelkniehebel kurz vor seinem Totpunkt. Der Betätigungsmechanismus übt in dieser Position eine elastische Kraft auf die Verbindungsachse der beiden Kniehebel in Richtung der Totpunktposition des Doppelkniehebels aus. So kann mit einer relativ geringen Kraft eine zuverlässige Zuhaltung der Form erreicht werden.

Der Betätigungsmechanismus kann vorzugsweise einen sekundären Kniehebel aufweisen, der auf die Doppelkniehebel einwirkt und der vorzugsweise die elastische Kraft ausüben kann. Die elastische Kraft kann beispielsweise durch einen Aktor im sekundären Kniehebel ausgeübt werden.

Die komplexe Mechanik zur Zuhaltung der Form ist somit von der Form räumlich getrennt. Insbesondere bei der hydraulischen Behälterformung befindet sie sich nicht unmittelbar im verschmutzungsgefährdeten Spritzbereich. Sie kann bei einer Form- und Füllanlage beispielsweise durch Schutzwände abgeschirmt sein, so dass keine Verschmutzungsgefahr besteht, wenn flüssiges Füllgut verspritzt wird oder ein Behälter in der Form platzt. Die Form kann problemlos gereinigt werden, ohne die Schließmechanik mit einbeziehen zu müssen.

Vorzugsweise kann der Schließmechanismus der Form über eine Mehrzahl von zueinander parallelen Kniehebeln verfügen, die an der Form in unterschiedlichen Positionen angreifen. Dadurch wird eine gleichmäßige Zuhaltung der Form über ihre gesamte Höhe erreicht.

Ein Ausführungsbeispiel der Erfindung wird nachfolgend anhand der beigefügten Abbildungen näher erläutert, die Folgendes darstellen:
- Figur 1: zeigt ein Ausführungsbeispiel einer erfindungsgemäßen Form in perspektivischer Darstellung in der geöffneten Position;
- Figur 2: zeigt das Ausführungsbeispiel aus Figur 1 in der geschlossenen Position;
- Figur 3: zeigt das Ausführungsbeispiel aus den Figuren 1 und 2 in der geöffneten Position in einer teilweise geschnittenen Darstellung von oben;
- Figur 4: zeigt die Darstellung aus Figur 3 in der geschlossenen Position;
- Figur 5: zeigt das Ausführungsbeispiel aus Figur 4 mit einer zusätzlichen Schutzwand;
- Figur 6: zeigt das Ausführungsbeispiel aus den vorhergehenden Figuren in perspektivischer Darstellung von der Seite des Schließmechanismus.

Alle Darstellungen verstehen sich als Veranschaulichung des Prinzips der Erfindung. Sie sind teilweise vereinfacht dargestellt, um die Erfindung zu veranschaulichen. Die Größenrelationen der einzelnen Bauteil zueinander kann ein Fachmann mit seinem Fachwissen ohne Weiteres verändern oder den konkreten Bedürfnissen anpassen.

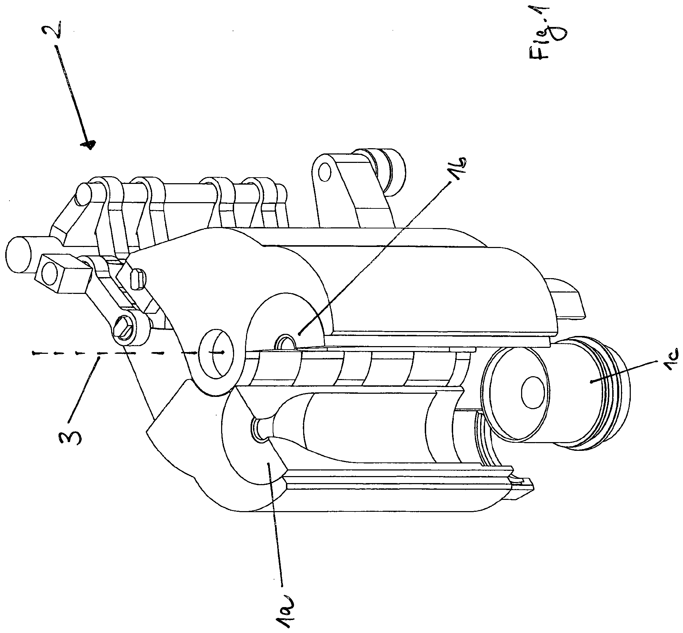

Figur 1 zeigt eine erfindungsgemäße Form zum Formen einer Flasche in der geöffneten Position in perspektivischer Darstellung. Die Form besteht aus einem ersten Teil 1a und einem zweiten Teil 1b sowie einem Formteil 1c für den Boden der Flasche. Die Formteile 1a und 1b lassen sich durch einen Schließmechanismus 2 von einer geöffneten in eine geschlossene Position bringen. Der Bodenteil 1c wird dabei zwischen den beiden Formteilen 1a und 1b eingeklemmt. Der Boden könnte auch an die Formteile 1a und 1b angeformt sein, so dass hier in Bezug auf die Erfindung weiterhin von einer zweiteiligen Form gesprochen werden soll, auch wenn die Form aus verschiedenen Gründen noch weitere Bestandteile haben kann.

Die beiden Formteile 1a und 1b sind um eine gemeinsame Drehachse 3 drehbar gelagert, so dass sie von der dargestellten geöffneten Position in eine geschlossene Position überführt werden können.

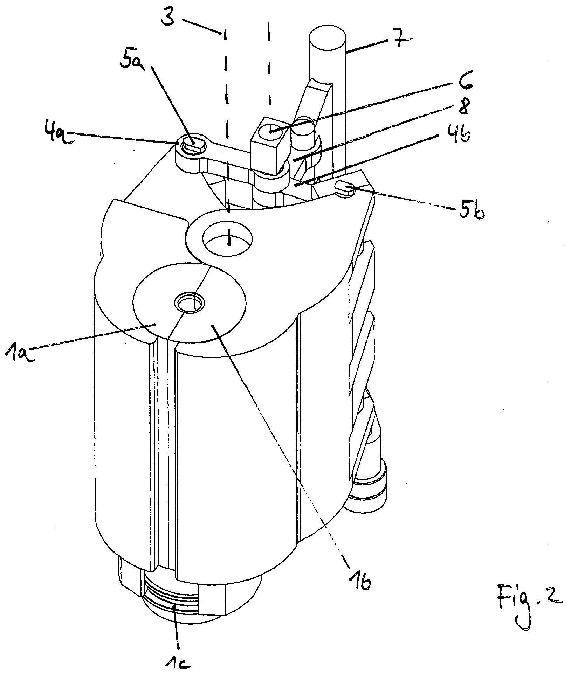

Figur 2 zeigt die Form aus Figur 1 in der geschlossenen Position. Die beiden Formteile 1a und 1b sind jeweils mit einem Ende eines Kniehebels 4a, 4b um jeweils eine Drehachse 5a, 5b drehbar gelagert. Die Kniehebel 4a, 4b sind mit ihren anderen Enden drehbar um eine Drehachse 6 verbunden, so dass aus den Kniehebeln 4a, 4b ein Doppelkniehebel entsteht.

Alle genannten Drehachsen 3, 5a, 5b und 6 sind zueinander parallel.

An der Drehachse 6 greift außerdem ein Betätigungsmechanismus 7 an, der über einen sekundären Kniehebel 8 verfügt.

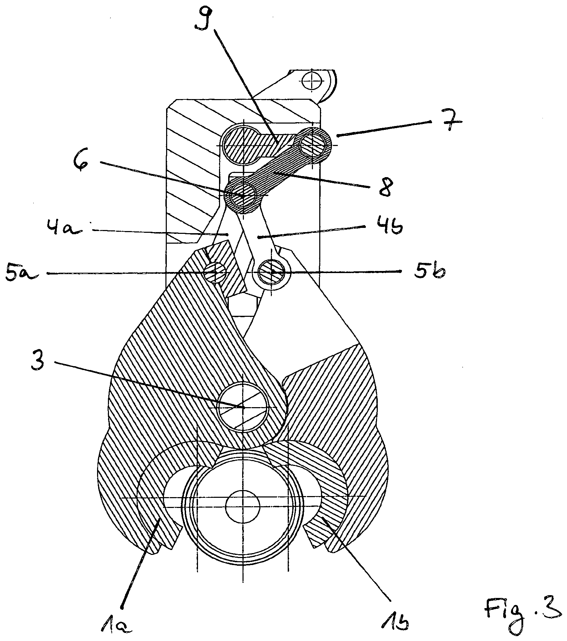

Figur 3 zeigt das Ausführungsbeispiel aus den Figuren 1 und 2 in einer teilweise geschnittenen Darstellung von oben in der geöffneten Position. Die Formteile 1a und 1b sind drehbar um die gemeinsame Achse 3 gelagert und mit den Kniehebeln 4a und 4b verbunden, die drehbar um die Achsen 5a und 5b gelagert sind. Die Kniehebel 4a, 4b sind um die Drehachse drehbar sowohl miteinander als auch mit dem Betätigungsmechanismus 7 verbunden. Der Betätigungsmechanismus 7 umfasst einen sekundären Kniehebel 8, der durch den Stellhebel 9 angetrieben wird.

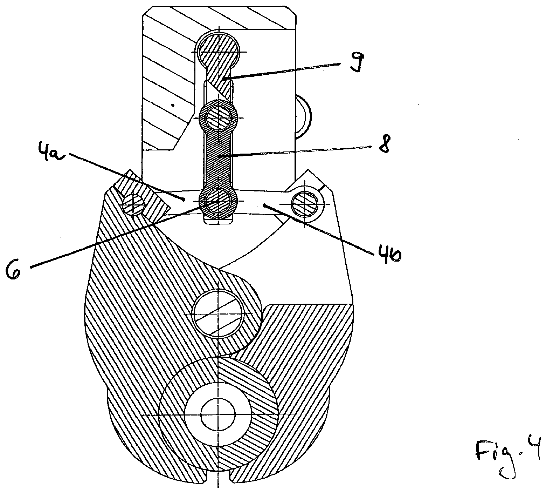

Figur 4 zeigt die Form gemäß Figur 3 in der geschlossenen Position. Der Stellhebel 9 wird hierfür um etwa 45° gedreht, wodurch der sekundäre Kniehebel 8 die Doppelkniehebel 4a, 4b in eine gestreckte Lage bringt, so dass diese kurz vor ihrem Totpunkt stehen, wenn die Formteile 1a, 1b geschlossen sind.

Der sekundäre Kniehebel 8 umfasst dabei einen Aktor, der eine elastische Kraft auf die Verbindungsachse 6 ausübt, so dass die Doppelkniehebel 4a, 4b in Richtung ihrer Totpunktstellung gedrückt werden. Auf diese Weise können mit einer vergleichsweise geringen Kraft des Aktors erhebliche Kräfte zur Zuhaltung der Formteile 1a, 1b aufgebracht werden.

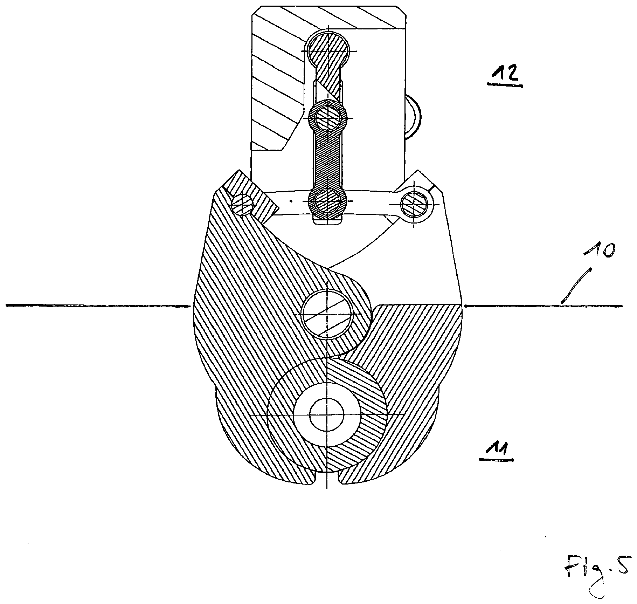

Figur 5 zeigt eine Form wie in Figur 4, bei der eine zusätzliche Schutzwand 10 zwischen dem Bereich 11 der Form und dem Bereich 12 des Schließmechanismus angeordnet ist. Der Schließmechanismus der Form befindet sich durch die erfindungsgemäße Ausgestaltung ohnehin beabstandet von der Form und wird durch die Wand zusätzlich geschützt. Insbesondere bei der simultanen Formung und Füllung von Behältern bei der hydraulischen Formung ist der Schließmechanismus damit zuverlässig vor Verunreinigungen durch eventuell verspritztes Füllgut geschützt.

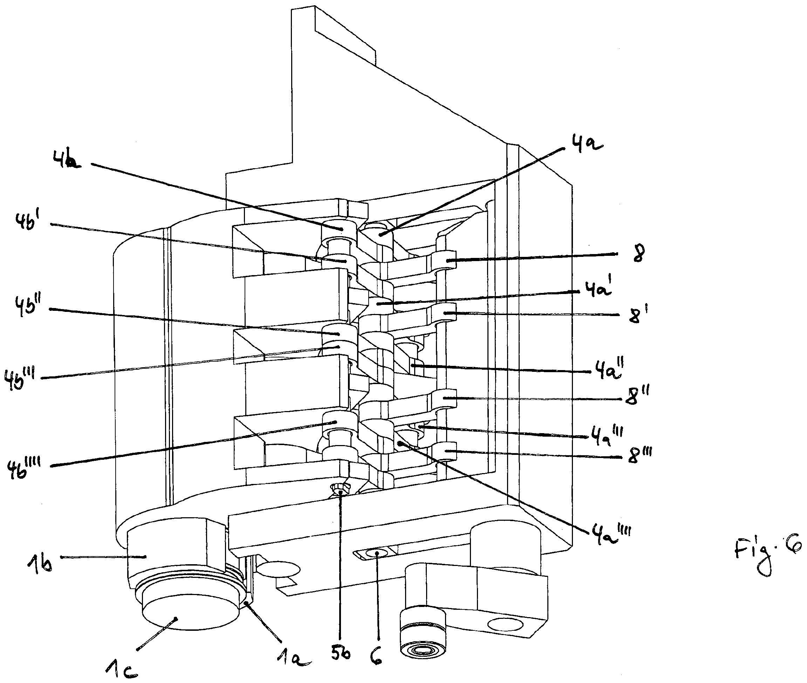

Figur 6 zeigt die Form gemäß der vorhergehenden Figuren in perspektivischer Darstellung von der Seite des Schließmechanismus in der geschlossenen Position. Zu erkennen ist, dass eine Mehrzahl von Doppelkniehebeln 4a - 4a"", 4b - 4b"" mit identischen Abmessungen vorgesehen sind, die um gemeinsame Achsen 5, 6 drehbar gelagert sind. An der Achse 6 greift eine Mehrzahl von sekundären Kniehebeln 8 - 8'" an. Dadurch kann die von der Schließmechanik übertragene Kraft gleichmäßig über die gesamte Höhe der Form verteilt und eine zuverlässige Zuhaltung der Form erreicht werden.

## Patentansprüche

1. Zweiteilige Form (1a, 1b) zur Formung von Hohlkörpern, insbesondere von Behältern, aus Vorformlingen durch ein unter Druck in den Vorformling eingeleitetes gasförmiges oder flüssiges Druckmedium,
bei der zumindest ein Teil der Form (1a, 1b) um eine Drehachse (3) drehbar gelagert ist, so dass die beiden Teile (1a, 1b) von einer geöffneten Position in eine geschlossene Position überführbar sind,
und wobei jeder Formteil (1a, 1b) um eine zu der Drehachse (3) parallelen Achse (5a, 5b) drehbar mit dem einen Ende eines Kniehebels (4a, 4b) verbunden ist
und die beiden anderen Enden der beiden Kniehebel (4a, 4b) um eine zu der Drehachse (3) parallelen Achse (6) drehbar miteinander und mit einem Betätigungsmechanismus (7, 8, 9) verbunden sind,
**dadurch gekennzeichnet, dass**
die Kniehebel (4a, 4b) in der geschlossenen Position der Form (1a, 1b) kurz vor ihrem Totpunkt stehen
und der Betätigungsmechanismus (7, 8, 9) eine elastische Kraft auf die Verbindungsachse (6) der Kniehebel (4a, 4b) in Richtung ihres Totpunkts ausübt.

2. Form (1a, 1b) nach Anspruch 1, **dadurch gekennzeichnet, dass** jeder Teil (1a, 1b) der Form um eine Drehachse (3) drehbar gelagert ist.

3. Form (1a, 1b) nach Anspruch 2, **dadurch gekennzeichnet, dass** die Teile der Form um eine gemeinsame Drehachse (3) drehbar gelagert sind.

4. Form (1a, 1b) nach einem der Ansprüche 1 bis 3, **dadurch gekennzeichnet, dass** der Betätigungsmechanismus (7, 8, 9) einen sekundären Kniehebel (8) umfasst, der auf die beiden Kniehebel (4a, 4b) einwirkt.

5. Form (1a, 1b) nach Anspruch 4, **dadurch gekennzeichnet, dass** der sekundäre Kniehebel (8) die elastische Kraft ausübt.

6. Form (1a, 1b) nach einem der Ansprüche 1 bis 5, **dadurch gekennzeichnet, dass** die elastische Kraft durch einen Aktor ausgeübt wird.

7. Form (1a, 1b) nach einem der Ansprüche 1 bis 6, **dadurch gekennzeichnet, dass** die Form (1a, 1b) über eine Schutzwand (10) verfügt, die den Bereich (11) der Form (1a, 1b) vom Bereich (12) des Schließmechanismus (2) abtrennt.

8. Form (1a, 1b) nach einem der Ansprüche 1 bis 7, **dadurch gekennzeichnet, dass** an der Form (1a, 1b) eine Mehrzahl von zueinander parallelen Kniehebeln (4a-4a""", 4b-4b""') angeordnet ist, die an der Form (1a, 1b) in unterschiedlichen Positionen angreifen.

## Claims

1. Two-part mould (1a, 1b) for forming hollow articles, especially containers, from preforms by means of a gaseous or liquid pressure medium introduced into the preform under pressure,
with at least one part of the mould (1a, 1b) being rotatably mounted about a rotational axis (3), such that both parts (1a, 1b) can be moved from an open position to a closed position,
and wherein each part of the mould (1a, 1b) is connected to the one end of a toggle lever (4a, 4b) rotatably about an axis (5a, 5b) parallel to the rotational axis (3) and both of the other ends of the two toggle levers (4a, 4b) are connected to each other rotatably about an axis (6) parallel to the rotational axis (3) and to an actuating mechanism (7, 8, 9),
**characterised in that**
in the closed position of the mould (1a, 1b), the toggle levers (4a, 4b) are close to their dead center
and **in that** the actuating mechanism (7, 8, 9) exerts an elastic force on the connecting axis (6) of the toggle levers (4a, 4b) in the direction of their dead center.

2. Mould (1a, 1b) according to claim 1, **characterised in that** every part (1a, 1b) of the mould is rotatably mounted about a rotational axis (3).

3. Mould (1a, 1b) according to claim 2, **characterised in that** the parts of the mould are rotatably mounted about a common rotational axis (3).

4. Mould (1a, 1b) according to anyone of the claims 1 through 3, **characterised in that** the actuating mechanism (7, 8, 9) comprises a secondary toggle lever (8), which acts on the two toggle levers (4a, 4b).

5. Mould (1a, 1b) according to claim 4, **characterised in that** the secondary toggle lever (8) exerts the elastic force.

6. Mould (1a, 1b) according to anyone of the claims 1 through 5, **characterised in that** the elastic force is exerted by an actuator.

7. Mould (1a, 1b) according to anyone of the claims 1 through 6, **characterised in that** the mould (1a, 1b) has a protective wall (10) separating the region (11) of the mould (1a, 1b) from the region (12) of the closing mechanism (2).

8. Mould (1a, 1b) according to anyone of the claims 1 through 7, **characterised in that** a plurality of mutually parallel toggle levers (4a-4a""", 4b-4b""") are arranged on the mould (1a, 1b), which engage at the mould (1a, 1b) in different positions.

## Revendications

1. Moule en deux parties (1a, 1b) de mise en forme de corps creux, notamment de récipients, à partir de préformes en introduisant dans la préforme un agent de pression gazeux ou liquide sous pression,
une partie au moins du moule (1a, 1b) étant logée de façon à pouvoir pivoter autour d'un axe de rotation (3) de sorte que les deux parties (1a, 1b) peuvent passer d'une position ouverte à une position fermée,
chaque partie de moule (1a, 1b) étant reliée à une extrémité d'un levier coudé (4a, 4b) de façon à pouvoir pivoter autour d'un axe (5a, 5b) parallèle à l'axe de rotation (3),
les deux autres extrémités des deux leviers coudés (4a, 4b) étant reliées l'une à l'autre et à un mécanisme d'actionnement (7, 8, 9) de façon à pouvoir pivoter autour d'un axe (6) parallèle à l'axe de rotation (3),
**caractérisé en ce que**
les leviers coudés (4a, 4b) sont, en position fermée du moule (1a, 1b), placés peu avant leur point mort
et que le mécanisme d'actionnement (7, 8, 9) exerce sur l'axe de jonction (6) des leviers coudés (4a, 4b) une force élastique dirigée vers leur point mort.

2. Moule (1a, 1b) selon la revendication 1, **caractérisé en ce que** chaque partie (1a, 1b) du moule est logée de façon à pouvoir pivoter autour d'un axe de rotation (3).

3. Moule (1a, 1b) selon la revendication 2, **caractérisé en ce que** les parties du moule sont logées de façon à pouvoir pivoter autour d'un axe de rotation commun (3).

4. Moule (1a, 1b) selon l'une des revendications 1 à 3, **caractérisé en ce que** le mécanisme d'actionnement (7, 8, 9) comporte un levier coudé secondaire (8) qui agit sur les deux leviers coudés (4a, 4b).

5. Moule (1a, 1b) selon la revendication 4, **caractérisé en ce que** le levier coudé secondaire (8) exerce la force élastique.

6. Moule (1a, 1b) selon l'une des revendications 1 à 5, **caractérisé en ce que** la force élastique est exercée par un actuateur.

7. Moule (1a, 1b) selon l'une des revendications 1 à 6, **caractérisé en ce que** le moule (1a, 1b) est muni d'une paroi de protection (10) qui sépare la zone (11) du moule (1a, 1b) de la zone (12) du mécanisme de fermeture (2).

8. Moule (1a, 1b) selon l'une des revendications 1 à 7, **caractérisé en ce qu'**une pluralité de leviers coudés (4a-4a""", 4b-4b""") est agencée au niveau du moule (1a, 1b) et agissent sur ce moule (1a, 1b) à différentes positions.
